(19) Europäisches Patentamt
European Patent Office
Office européen des brevets

(11) **EP 2 981 068 A1**

(12) **DEMANDE DE BREVET EUROPEEN**

(43) Date de publication:
**03.02.2016 Bulletin 2016/05**

(51) Int Cl.:
***H04N 5/349*** (2011.01)

(21) Numéro de dépôt: **15290184.9**

(22) Date de dépôt: **15.07.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **30.07.2014 FR 1401756**

(71) Demandeur: **MBDA France**
**92350 Le Plessis-Robinson (FR)**

(72) Inventeur: **de Picciotto, François**
**75015 Paris (FR)**

(74) Mandataire: **Gevers France**
**41, avenue de Friedland**
**75008 Paris (FR)**

(54) **PROCÉDÉ POUR DIMINUER LA COMPOSANTE BASSE FRÉQUENCE DU BRUIT DE MESURE D'UN IMAGEUR PHOTOSENSIBLE ET SES APPLICATIONS**

(57) - Procédé pour diminuer la composante basse fréquence du bruit de mesure d'un imageur photosensible et ses applications.

- Selon l'invention, on crée volontairement un mouvement (b) non rectiligne de défilement de la scène observée (Sc) sur la matrice photosensible (M) de l'imageur.

Fig. 1

EP 2 981 068 A1

**Description**

La présente invention concerne un procédé pour diminuer la composante basse fréquence du bruit de mesure d'un imageur à matrice de pixels photosensibles et son application au perfectionnement des autodirecteurs pour le guidage en phase terminale de missiles vers une cible.

Les imageurs photosensibles fonctionnant de façon cadencée et comportant une matrice de pixels photosensibles, sensibles à la lumière visible ou aux rayonnements infra-rouge, sont bien connus. On sait de plus que le coût de tels imageurs est d'autant plus élevé que leur résolution est plus grande, c'est-à-dire que la taille desdits pixels photosensibles est plus petite.

Aussi, pour certaines applications (comme par exemple celle de la réalisation d'autodirecteurs de missiles destinés à être détruits au premier usage), il est avantageux, en terme de coût, d'utiliser des imageurs photosensibles à faible résolution.

Cependant, outre sa faible résolution et à cause d'elle, un imageur photosensible de faible coût présente l'inconvénient d'engendrer un important bruit de mesure de basse fréquence temporelle. En effet, on sait :

- que, dans une telle matrice de pixels photosensibles, la position de chaque pixel est déterminée par les coordonnées du centre dudit pixel ;
- que, quelle que soit la position d'un point image dans un pixel, la position de ce point image est considérée être celle du centre dudit pixel ;
- qu'ainsi, à chaque mesure de position dudit point image, se produit une erreur spatiale qui est la différence entre la position vraie dudit point image et la position du centre du pixel correspondant ; et
- que, au fur et à mesure des prises d'image par ce pixel dudit imageur, les erreurs spatiales successives sur la position dudit point image forment une suite temporelle d'erreurs spatiales de mesures de position formant ledit bruit de mesure de base fréquence.

Un tel bruit de mesure peut bien entendu être éliminé par filtrage de forte constante de temps, mais le temps de réaction du missile est alors augmenté, ce qui est désavantageux pour la plus petite distance d'approche de la cible.

La présente invention a pour objet de remédier à ces inconvénients en permettant de perfectionner un imageur photosensible de faible coût, en réduisant la composante basse fréquence de son bruit de mesure.

A cette fin, selon l'invention, le procédé pour diminuer la composante basse fréquence du bruit de mesure d'un imageur photosensible fonctionnant de façon cadencée à une fréquence 1/T et comprenant une matrice de pixels photosensibles observant une scène, est remarquable :

- en ce qu'on crée volontairement un mouvement non rectiligne de défilement de ladite scène sur ladite matrice ;
- en ce que l'amplitude dudit mouvement de défilement est au moins égale à 5 pixels ; et
- en ce que la vitesse v dudit mouvement de défilement respecte la relation

$$\frac{a}{2T} \leq v \leq \frac{a}{2t}$$

dans laquelle a est la taille desdits pixels (c'est-à-dire la résolution dudit imageur) de ladite matrice et t est le temps d'intégration des images par ledit imageur.

Ainsi, grâce à la présente invention, par la mise en oeuvre d'un mouvement de défilement de faible amplitude, de préférence au moins égale à 10 pixels, on assure le changement régulier du ou des pixels sur le(s)quel(s) se forme l'image d'un objet observé de ladite scène, ce qui permet d'éviter, au niveau de chaque pixel, la formation de ladite suite temporelle d'erreurs spatiales de mesure et, donc, de diminuer la composante basse fréquence du bruit de mesure de l'imageur. De plus, la vitesse de défilement choisie permet d'éviter tout flou dans l'image obtenue, puisque la distance parcourue durant le temps d'intégration correspond à moins d'un demi pixel.

Avantageusement, ledit mouvement de défilement forme une boucle, notamment circulaire.

Ledit mouvement de défilement est obtenu par commande en orientation de l'axe de visée dudit imageur. Ledit axe de visée peut être fixe par rapport audit imageur alors que ce dernier est monté mobile. En variante, l'imageur est associé à un système optique mobile à travers lequel ladite matrice observe la scène et ledit imageur est fixe, alors que ledit axe de visée est rendu mobile par l'intermédiaire dudit système optique.

La présente invention concerne de plus un imageur photosensible fonctionnant de façon cadencée à la fréquence 1/T et comportant une matrice de pixels photosensibles observant une scène, cet imageur étant remarquable en ce qu'il comporte des moyens de commande en orientation de son axe de visée pour créer un mouvement non rectiligne de défilement de ladite scène sur ladite matrice, l'amplitude dudit mouvement de défilement étant au moins égale à 5 pixels et la vitesse v dudit mouvement de défilement respectant la relation

$$\frac{a}{2T} \leq v \leq \frac{a}{2t}$$

dans laquelle a est la taille desdits pixels de ladite matrice et t est le temps d'intégration des images par ledit imageur.

On remarquera que la mise en oeuvre de la présente invention est particulièrement intéressante dans le cas d'un autodirecteur destiné au guidage en phase terminale d'un missile vers une cible. En effet, pour la raison évidente de coût rappelée ci-dessus, un tel autodirecteur comporte un imageur photosensible de faible coût et de faible résolution. Cet imageur photosensible présente donc un fort bruit de mesure de basse fréquence, ce qui est particulièrement désavantageux pour le fonctionnement du système de guidage du missile qui exploite les images de l'imageur, du fait que ce bruit de mesure se trouve dans la bande passante dudit système de guidage. Filtrer ce bruit, reviendrait à obtenir un guidage plus lent, ce qui interdirait le guidage vers des cibles rapides ou manoeuvrantes ou des guidages de faible durée.

Par ailleurs, l'application de la présente invention à un autodirecteur est d'autant plus intéressante que, de façon connue, l'imageur photosensible de ce dernier est déjà associé à un dispositif optique de commande en orientation de l'axe de visée dudit imageur permettant de rechercher une cible dans la scène observée.

Aussi, selon l'invention, un tel autodirecteur est remarquable en ce que ledit dispositif optique de commande en orientation de l'axe de visée dudit imageur, prévu pour la recherche de cible, est de plus utilisé pour créer un mouvement non rectiligne de défilement de ladite scène sur ladite matrice, l'amplitude dudit mouvement de défilement étant au moins égale à 5 pixels et la vitesse v dudit mouvement de défilement respectant la relation

$$\frac{a}{2T} \leq v \leq \frac{a}{2t}$$

dans laquelle a est la taille desdits pixels de ladite matrice et t est le temps d'intégration des images par ledit imageur.

Comme précédemment mentionné, ledit mouvement non rectiligne de défilement peut former une boucle, de préférence circulaire.

De ce qui précède, on comprendra aisément que la présente invention concerne de plus un missile comportant un autodirecteur de guidage du type décrit ci-dessus.

Par ailleurs, on comprendra de plus que les paramètres (amplitude, vitesse) du défilement conforme à la présente invention peuvent être variables dans le temps en fonction de l'évolution des paramètres de formation des images par l'imageur (évolution du temps d'intégration).

Les figures du dessin annexé feront bien comprendre comment l'invention peut être réalisée. Sur ces figures, des éléments semblables portent des références identiques.

La figure 1 illustre schématiquement une première forme de mise en oeuvre du procédé conforme à l'invention.

Les figures 2A, 2B et 2C expliquent schématiquement le mode opératoire du procédé de la présente invention.

La figure 3 illustre schématiquement une deuxième forme de mise en oeuvre du procédé de l'invention.

La figure 4 montre schématiquement la partie avant d'un missile pourvu d'un autodirecteur apte à mettre en oeuvre la présente invention.

La figure 5A et 6A montrent respectivement les densités spectrales de puissance des erreurs de mesure en fonction de la fréquence selon deux directions y et z rectangulaires parallèles à la matrice photosensible de l'imageur de l'autodirecteur du missile de la figure 4, dans le cas où le procédé de la présente invention n'est pas mis en oeuvre.

Les figures 5B et 6B montrent respectivement les densités spectrales de puissance des erreurs de mesure en fonction de la fréquence selon lesdites directions y et z, dans le cas où le procédé de la présente invention est mis en oeuvre dans l'imageur de l'autodirecteur du missile de la figure 4, la figure 5B devant être comparée à la figure 5A et la figure 6B à la figure 6A.

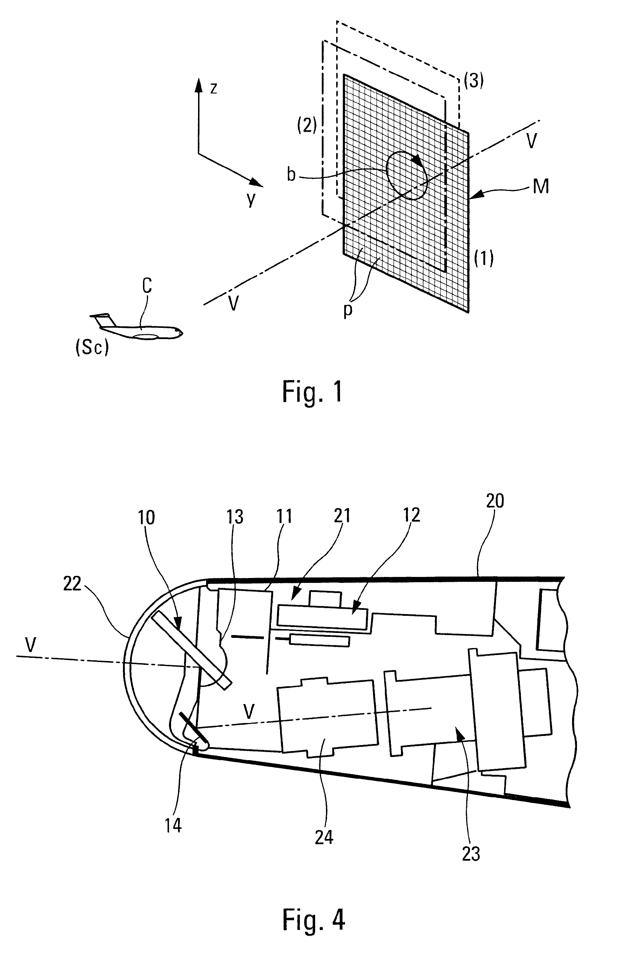

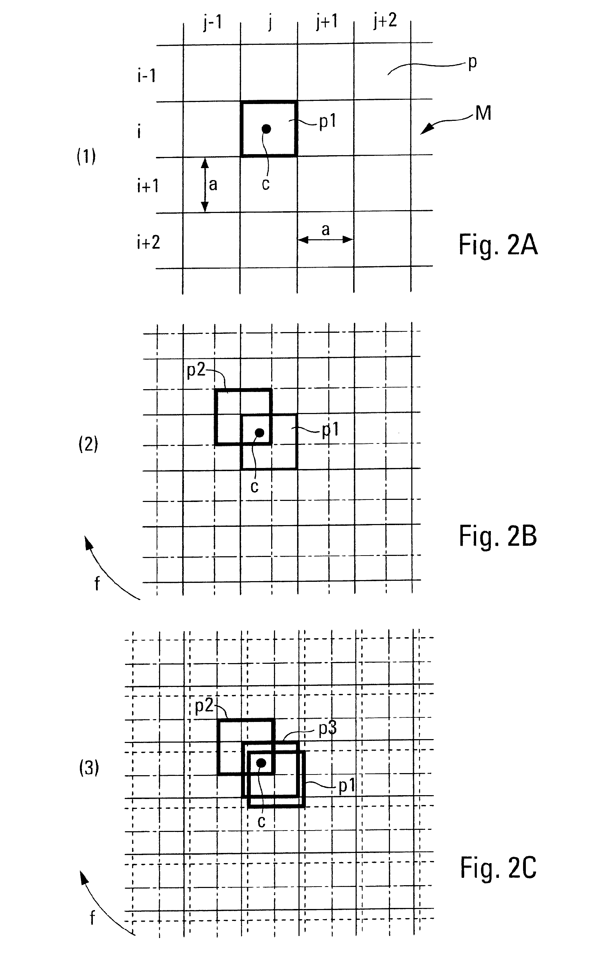

Sur la figure 1, on a représenté schématiquement un imageur photosensible par sa seule matrice photosensible M, ledit imageur présentant un axe de visée V-V et fonctionnant de façon cadencée à une fréquence 1/T. La matrice photosensible M observe une cible C se trouvant dans la scène Sc. Cette matrice photosensible M est composée d'une pluralité de pixels photosensibles p, qui sont répartis en lignes et en colonnes et dont la taille définit la résolution a de ladite matrice M (voir la figure 2A). Par exemple, les lignes de pixels photosensibles p sont disposées horizontalement (direction y), tandis que les colonnes desdits pixels sont verticales (direction z).

L'objet de la présente invention est de réduire la composante basse fréquence du bruit de mesure dudit imageur.

A cette fin, sur la figure 1, la matrice photosensible M étant supposée mobile et l'axe de visée V-V étant fixe par rapport à cette dernière, on communique audit axe de visée V-V un mouvement non rectiligne, de préférence une boucle circulaire b, en faisant prendre à ladite matrice photosensible M des positions successives (1), (2), (3),..pour lesquelles elle reste parallèle à elle-même. On engendre ainsi le défilement de la scène Sc et de la cible C sur la matrice photosensible M.

L'amplitude de ce défilement est au moins égale à 5 pixels p (de préférence au moins égale à 10 pixels p) et la vitesse v du défilement respecte la relation

$$\frac{a}{2T} \leq v \leq \frac{a}{2t}$$

dans laquelle t est le temps d'intégration des images par la matrice M.

Les schémas des figures 2A, 2B et 2C permettent de comprendre intuitivement comment la présente invention agit pour réduire la composante basse fréquence du bruit de mesure de la matrice photosensible M. Sur ces figures, on a représenté une portion très agrandie de cette dernière.

Sur la figure 2A, pour laquelle la matrice M est dans une position (1), l'image c de la cible C se trouve dans le pixel pij disposé à l'intersection de la ligne i et de la colonne j et occupant la position p1. Dans ce cas, l'information obtenue est seulement que l'image c de la cible C est dans le pixel pij en position p1, sans indiquer où cette image se trouve dans ledit pixel pij.

Sous l'effet du défilement conforme à la présente invention, la matrice M se déplace, par exemple dans le sens de la flèche f, et prend la position (2) de la figure 2B, de sorte que le pixel pij vient prendre la position p2. Dans l'exemple décrit, l'image c reste dans le pixel pij en position p2. Toutefois, en poursuivant le défilement conforme à la présente invention, la matrice M prend - dans l'exemple représenté - la position (3), de sorte que, maintenant, l'image c apparaît dans le pixel pi+1,j+1 en position p3.

Ainsi, de proche en proche, on améliore le bruit basse fréquence de la matrice M, grâce au défilement qu'on lui impose, puisque on empêche la formation de la suite temporelle d'erreurs spatiales de mesure mentionnée ci-dessus, en faisant passer progressivement l'image c de la cible C d'un pixel à un autre.

On comprendra aisément que, au lieu de déplacer la matrice M de la façon indiquée ci-dessus en regard de la figure1, il est équivalent, et souvent plus avantageux, pour la mise en oeuvre de la présente invention, de maintenir la matrice M fixe et de commander en orientation la ligne de visée V-V.

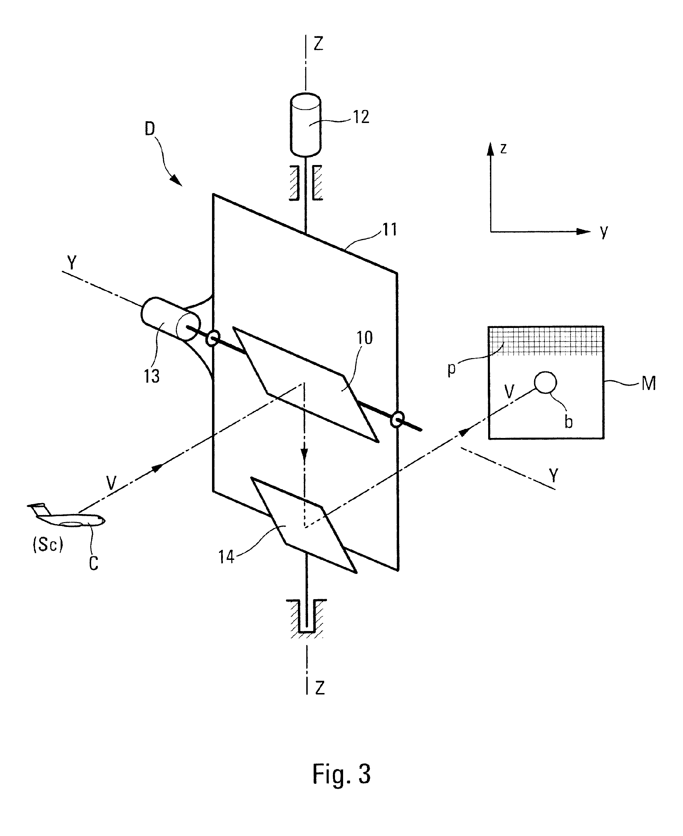

Un dispositif optique D pour ce faire est représenté schématiquement sur la figure 3. Ce dispositif D comporte un miroir 10, monté à la Cardan pour pouvoir pivoter autour de deux axes rectangulaires, par exemple un axe horizontal Y-Y et un axe vertical Z-Z, ledit miroir 10 observant la cible C dans la scène Sc et définissant ainsi une ligne de visée V-V. Par exemple, le dispositif optique D comporte une monture 11 commandable en orientation autour de l'axe Z-Z sous l'action d'un moteur 12 et le miroir 10 est commandable en orientation autour de l'axe Y-Y, par rapport à la monture 11, sous l'action d'un moteur 13 solidaire de cette dernière. De plus, un miroir 14, fixé rigidement sur la monture 11, est disposé de façon à assurer la continuité de la ligne de visée V-V jusqu'à la matrice M.

Ainsi, par commande des moteurs 12 et 13, il est possible de faire défiler la scène Sc sur la matrice M, dans les mêmes conditions que celles indiquées en regard des figures 1, 2A, 2B, 2C, pour pouvoir diminuer le bruit de mesure basse fréquence de la matrice M.

On remarquera que le dispositif optique D, représenté sur la figure 3, est déjà prévu dans des autodirecteurs connus, non pas pour les fins de la présente invention, mais pour rechercher la cible C dans la scène Sc. Dans ce cas, il est particulièrement avantageux d'utiliser le dispositif D à la fois pour rechercher la cible C dans la scène Sc et pour réduire le bruit de mesure basse fréquence de la matrice photosensible de l'imageur de l'autodirecteur.

Sur la figure 4, on a représenté la partie avant d'un missile 20 comportant un autodirecteur 21 pourvu d'un dispositif optique D semblable à celui de la figure 3. Pour des raisons de clarté de dessin, seuls des éléments individuels de ce dispositif sont visibles. Il s'agit du miroir mobile 10 disposé derrière le radôme 22, de la monture 11, du moteur fixe 12, du moteur mobile 13 et du miroir de renvoi 14. Dans le schéma de la figure 4, la matrice M n'est pas visible, car disposée à l'intérieur d'un imageur 23. De plus, dans ce schéma, un dispositif de focalisation optique 24 est disposé entre le miroir de renvoi 14 et l'imageur 23.

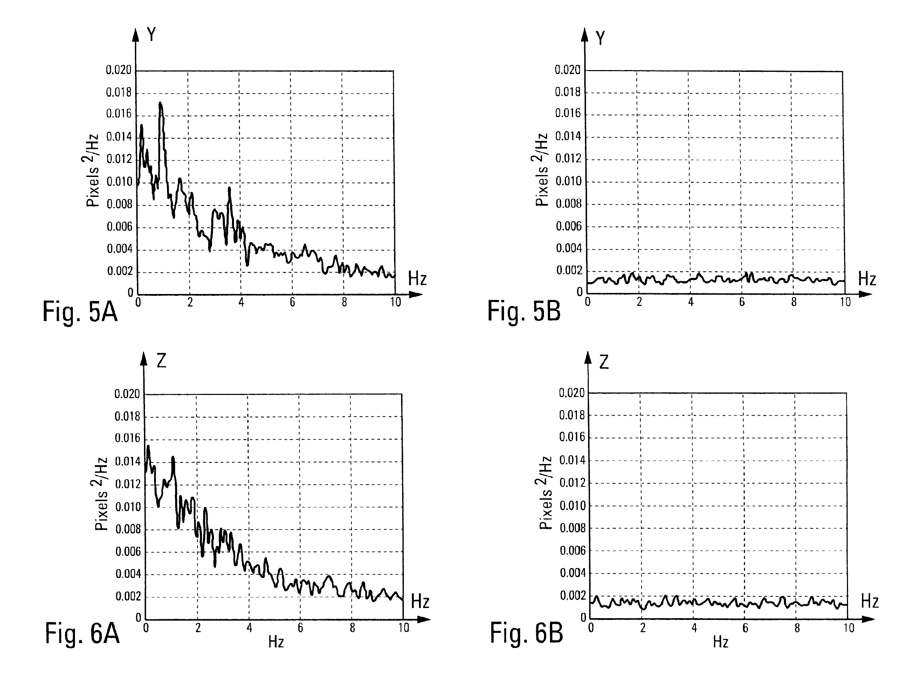

Si, sans mettre en oeuvre la présente invention, on mesure les densités spectrales de puissance des erreurs de mesure dans les directions Y et Z de l'imageur 23 fonctionnant à une cadence 1/T de l'ordre de 100Hz, on obtient les résultats illustrés par les figures 5A et 6A montrant une importante composante basse fréquence.

Au contraire, si on impose au dispositif optique D de l'autodirecteur 21 d'effectuer un défilement de la scène Sc sur l'imageur 23, par exemple circulaire à une vitesse linéique de 0,6 pixel/image, on obtient les résultats illustrés par les figures 5B et 6B montrant la quasi disparition de la composante basse fréquence.

**Revendications**

1. Procédé pour diminuer la composante basse fréquence du bruit de mesure d'un imageur photosensible (23) fonctionnant de façon cadencée à une fréquence 1/T et comportant une matrice de pixels photosensibles (M) observant une scène (Sc), **caractérisé :**

   - **en ce qu'**on crée volontairement un mouvement non rectiligne (b) de défilement de ladite scène (Sc) sur ladite matrice (M) ;
   - **en ce que** l'amplitude dudit mouvement de défilement est au moins égale à 5 pixels ; et
   - **en ce que** la vitesse v dudit mouvement de défilement respecte la relation

   $$\frac{a}{2T} \leq v \leq \frac{a}{2t}$$

   dans laquelle a est la taille desdits pixels de ladite matrice et t est le temps d'intégration des images par ledit imageur.

**2.** Procédé selon la revendication 1, **caractérisé en ce que** l'amplitude dudit mouvement de défilement (b) est au moins égale à 10 pixels.

**3.** Procédé selon l'une des revendications 1 ou 2, **caractérisé en ce que** ledit mouvement de défilement (b) forme une boucle.

**4.** Procédé selon la revendication 3, **caractérisé en ce que** ladite boucle (b) est au moins approximativement circulaire.

**5.** Procédé selon l'une des revendications 1 à 4, **caractérisé en ce que** ledit mouvement de défilement est obtenu par commande en orientation de l'axe de visée (V-V) dudit imageur.

**6.** Procédé selon la revendication 5, **caractérisé en ce que** ledit axe de visée (V-V) est fixe par rapport audit imageur et **en ce que** ledit imageur est monté mobile.

**7.** Procédé selon la revendication 5, mis en oeuvre avec un imageur associé à un dispositif optique (D) à travers lequel ladite matrice observe ladite scène, **caractérisé en ce que** ledit imageur est fixe et **en ce que** ledit axe de visée (V-V) est rendu mobile par l'intermédiaire dudit dispositif optique (D).

**8.** Imageur photosensible fonctionnant de façon cadencée à une fréquence 1/T et comportant une matrice de pixels photosensibles observant une scène, **caractérisé en ce qu'**il est associé à un dispositif optique (D) pour la commande en orientation de l'axe de visée dudit imageur pour créer un mouvement non rectiligne de défilement de ladite scène sur ladite matrice, l'amplitude dudit mouvement de défilement étant au moins égale à 5 pixels et la vitesse v dudit mouvement de défilement respectant la relation

$$\frac{a}{2T} \le v \le \frac{a}{2t}$$

dans laquelle a est la taille desdits pixels de ladite matrice et t est le temps d'intégration des images par ledit imageur.

**9.** Autodirecteur pour le guidage en phase terminale d'un missile vers une cible, ledit autodirecteur comportant :

• un imageur photosensible fonctionnant de façon cadencée à une fréquence 1/T et comportant une matrice de pixels photosensibles observant une scène, et
• un dispositif optique (D) pour la commande en orientation de l'axe de visée dudit imageur pour rechercher ladite cible dans ladite scène,

**caractérisé en ce que** ledit dispositif optique (D) de commande en orientation de l'axe de visée dudit imageur est de plus utilisé pour créer un mouvement non rectiligne de défilement de ladite scène sur ladite matrice, l'amplitude dudit mouvement de défilement étant au moins égale à 5 pixels et la vitesse v dudit mouvement de défilement respectant la relation

$$\frac{a}{2T} \le v \le \frac{a}{2t}$$

dans laquelle a est la taille desdits pixels de ladite matrice et t est le temps d'intégration des images par ledit imageur.

**10.** Autodirecteur selon la revendication 9, **caractérisé en ce que** ledit mouvement de défilement (b) forme une boucle, de préférence circulaire.

**11.** Missile, **caractérisé en ce qu'**il comporte un autodirecteur de guidage en phase terminale tel que spécifié sous l'une des revendications 9 ou 10.

Fig. 1

Fig. 4

Fig. 2A

Fig. 2B

Fig. 2C

Fig. 3

Fig. 5A

Fig. 5B

Fig. 6A

Fig. 6B

Europäisches
Patentamt

European
Patent Office

Office européen
des brevets

**RAPPORT DE RECHERCHE EUROPEENNE**

Numéro de la demande

EP 15 29 0184

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 1 301 027 A1 (ABSCONDENDA AB [SE]) 9 avril 2003 (2003-04-09) * alinéa [0013] - alinéa [0016] * * alinéas [0053], [0054]; figure 7b * ----- | 1-11 | INV. H04N5/349 |
| A | US 2011/037860 A1 (BROEKAERT MICHEL [FR] ET AL) 17 février 2011 (2011-02-17) * alinéa [0158] - alinéa [0161] * ----- | 1-11 | |
| A | US 5 717 208 A (WOOLAWAY II JAMES T [US]) 10 février 1998 (1998-02-10) * colonne 4, ligne 55 - colonne 5, ligne 10 * ----- | 1-11 | |
| A | US 5 389 791 A (PASSMORE RONALD C [US]) 14 février 1995 (1995-02-14) * le document en entier * ----- | 1-11 | |

DOMAINES TECHNIQUES
RECHERCHES (IPC)

H04N

Le présent rapport a été établi pour toutes les revendications

| Lieu de la recherche | Date d'achèvement de la recherche | Examinateur |
|---|---|---|
| Munich | 22 octobre 2015 | Montanari, Marco |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 29 0184

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-10-2015

| Document brevet cité au rapport de recherche | | Date de publication | Membre(s) de la famille de brevet(s) | | Date de publication |
|---|---|---|---|---|---|
| EP 1301027 | A1 | 09-04-2003 | AUCUN | | |
| US 2011037860 | A1 | 17-02-2011 | EP | 2243115 A1 | 27-10-2010 |
| | | | FR | 2927448 A1 | 14-08-2009 |
| | | | US | 2011037860 A1 | 17-02-2011 |
| | | | WO | 2009101151 A1 | 20-08-2009 |
| US 5717208 | A | 10-02-1998 | AUCUN | | |
| US 5389791 | A | 14-02-1995 | AUCUN | | |

EPO FORM P0460

Pour tout renseignement concernant cette annexe : voir Journal Officiel de l'Office européen des brevets, No.12/82